# EUROPÄISCHE PATENTSCHRIFT

(11) **EP 1 624 281 B1**
(45) Veröffentlichungstag und Bekanntmachung des Hinweises auf die Patenterteilung: **27.08.2014**
(21) Anmeldenummer: 05010182.3
(22) Anmeldetag: 11.05.2005
(51) Int. Cl.: G01B 21/04

(54) **Verfahren zum Betreiben eines Tastsystems**
Method of operating a probe system
Procédé d'utilisation d'un système de palpation

(30) Priorität: 06.08.2004 DE 102004038271
(43) Veröffentlichungstag der Anmeldung: 08.02.2006
(73) Patentinhaber: Dr. Johannes Heidenhain GmbH, 83292 Traunreut (DE)
(72) Erfinder: Gröll, Klaus, 83329 Waging am See (DE)

(56) Entgegenhaltungen:
- DE-A1- 4 330 873
- FR-A- 2 730 310
- US-A1- 2002 091 497
- US-A1- 2003 086 095

## Beschreibung

Die Erfindung betrifft ein Verfahren zum Betreiben eines Tastsystems zu dessen Funktionsüberprüfung gemäß dem Anspruch 1.

Derartige Tastsysteme werden beispielsweise zur Positionsbestimmung von Werkstücken verwendet, die in materialbearbeitenden Maschinen, z. B. Werkzeugmaschinen, eingespannt sind. Diese Tastsysteme weisen häufig eine stationäre Sender-Empfängereinheit auf, welche an einem ortfesten Element der materialbearbeitenden Maschine befestigt ist und ein relativ dazu bewegliches bzw. mobiles Teil, welches häufig als Tastkopf bezeichnet wird, das an einem beweglichen Element der materialbearbeitenden Maschine, etwa an einer Werkzeugspindel angebracht ist. Dabei umfasst der Tastkopf einen aus einer Ruheposition auslenkbaren Taststift, bzw. ein auslenkbares Tastelement, welches bei einer Auslenkung aus seiner Ruheposition heraus ein Schaltsignal erzeugt. Unter der Ruheposition des Tastelementes wird eine Position des Tastelementes verstanden, in der es keinen Kontakt mit einem Werkstück hat. Bei Kontakt des Tastelementes mit dem Werkstück wird das Tastelement aus seiner Ruheposition heraus ausgelenkt.

Bei sogenannten kabellosen Tastsystemen wird das entsprechende Schaltsignal vom Tastkopf als elektromagnetisches Signal, insbesondere als Infrarotsignal, an die stationäre Sender-Empfängereinheit übertragen. In dieser werden die Ausgangssignale des Tastsystems ausgewertet, um das Auftreten von Schaltsignalen (also eine Auslenkung des Tastelementes) festzustellen.

Ein derartiger Tastkopf wird im Messbetrieb häufig in die Spindel einer Werkzeugmaschine eingespannt, wobei die Spindel im Raum bewegt werden kann. Die Bewegung wird üblicherweise von einer Numerischen Steuerung geregelt. Üblicherweise ist dann die stationäre Sender-Empfängereinheit zur Signalübertragung zwischen dem Tastkopf und der Numerischen Steuerung beispielsweise über ein Kabel mit der Numerischen Steuerung verbunden. Die Verknüpfung des Tastsystems mit einer relativ vielschichtigen Numerischen Steuerung führt zu einem vergleichsweise komplexen Gesamtsystem. Wenn nun in diesem Gesamtsystem Fehler auftreten, ist die Ursachensuche bzw. die Lokalisierung dieser Fehler oft schwierig. Bei auftretenden Fehlern wurden bisher üblicherweise derartige Tastsysteme zur Überprüfung an den Hersteller zurückgeschickt, wobei meist unklar war, ob der Fehler im Tastsystem oder aber in der Numerischen Steuerung liegt.

Aus der Offenlegungsschrift DE 43 30 873 A1 ist ein Koordinatenmessgerät bekannt, bei dem Antastsignale gespeichert werden. Diese können ausgelesen werden mit dem Ziel letztlich geeignete Parametersätze für unterschiedliche Tasterkonfigurationen zu finden.

Im Dokument US 2002/0091497 A1 wird ein Verfahren beschrieben, mit dem möglichst viele Funktionen der Steuerung durch einen Rechner mit einem Betriebssystem ohne Echtzeitverhalten übernommen werden können.

Durch die Offenlegungsschrift US 2003/086095 A1 ist ein Verfahren offenbart, bei dem eine Steuer- und Auswerteeinheit mit einem hiervon unabhängig arbeitenden Messsensor einfach synchronisiert werden kann.

Schließlich wird im Dokument FR 2 730 310 eine Vorrichtung offenbart, mit deren Hilfe periodisch Temperaturen im Innenraum eines temperaturgeregelten Behältnisses gespeichert werden. Der Speicherinhalt ist über eine Schnittstelle auslesbar.

Der Erfindung liegt unter anderem die Aufgabe zugrunde ein Verfahren zur Überprüfung der Funktion eines Tastsystems zu schaffen, welches eine einfache Fehleranalyse ermöglicht.

Diese Aufgabe wird erfindungsgemäß durch die Merkmale des Anspruches 1 gelöst.

Das Tastsystem weist einen Tastkopf auf, der eine Elektronik zur Erzeugung eines Signals umfasst. Ferner gehört zum Tastsystem eine Analyseeinheit, welche ihrerseits eine elektronische Schaltung mit einer CPU (bzw. einem Mikroprozessor), einem Zeitgenerator, sowie einer Schnittstelle aufweist. Die Schaltung ist dabei so konfiguriert, dass der CPU der Informationsinhalt des Signals zugeführt werden kann, und dieses durch die CPU zur Erzeugung von Output-Daten verarbeitet werden kann. Ferner sind der Speichereinheit die Output-Daten zuführbar, wobei diese in der Speichereinheit zeitdefiniert abgespeichert werden können. Über die Schnittstelle sind die in der Speichereinheit gespeicherten Daten zu Diagnosezwecken auslesbar.

In weiterer Ausgestaltung der Erfindung wird durch den Zeitgenerator, eine Zeitinformation, etwa die Angabe der absoluten Zeit durch eine elektronische Uhr, erzeugt. Diese Zeitinformation wird dann ebenso der CPU zugeführt und dann Output-Daten erzeugt, welche die Zeitinformation enthalten.

Der Begriff zeitdefiniert speicherbar umfasst nicht nur eine Speicherung der Output-Daten zusammen mit einer absoluten Zeitinformation. Es kann durch den Zeitgenerator auch eine Abfragefrequenz erzeugt werden. Mit Vorteil ist die Abfragefrequenz während des Betriebs der Analyseeinheit stets gleich groß, so dass nach gleich langen Zeitintervallen der CPU die Informationsinhalte der betreffenden Signale zugeführt werden. Basierend auf der Rangnummer des zugeführten Informationsinhaltes und der Abfragefrequenz bzw. der Länge der Zeitintervalle kann dann die Zeit des Zuführens des Informationsinhalts an die CPU bestimmt werden (T = Rangnummer : Abfragefrequenz, bzw. T = Rangnummer * Länge der Zeitintervalle).

Durch eine derartige Vorrichtung bzw. das neue Verfahren ist es möglich, dass die Arbeitsweise bzw. der Betriebszustand eines Tastsystems zeitdefiniert festgehalten werden kann, um später untersucht zu werden.

Mit Vorteil umfasst das Tastsystem einen auslenkbaren Taststift. Durch eine Messelektronik, wird insbesondere dann eine Pegeländerung in einem Positionssignal erzeugt, wenn eine Auslenkung des Taststifts detektiert wird. Das Positionssignal ist demnach ein von der Lage des Taststifts abhängiges Signal. In einer bevorzugten Ausgestaltung der Erfindung weist der Tastkopf neben der Messelektronik auch eine sogenannte Betriebselektronik auf, welche geeignet ist ein von der Lage des Taststiftes unabhängiges Betriebszustandssignal zu erzeugen. Es hat sich als vorteilhaft erwiesen, wenn der CPU die Informationsinhalte des Positionssignals oder des Betriebszustandssignals zuführbar sind, oder wenn sowohl die Informationsinhalte des Positionssignals als auch die des Betriebszustandssignals der CPU zugeführt werden können.

In einer weiteren bevorzugten Ausgestaltung der Erfindung werden die Output-Daten von der CPU in Form von Datensätzen erzeugt, wobei jeder Datensatz ein Zeitdatum und ein Signaldatum enthält. Mit anderen Worten wird also mit den Signaldaten ein zugehöriger Zeitstempel abgespeichert.

In weiterer vorteilhafter Ausgestaltung der Erfindung befindet sich die Analyseeinheit innerhalb eines Gehäuses eines separaten Geräts, welches aus dem Tastsystem entnehmbar ist, so dass die gespeicherten Daten an einem anderen Ort ausgelesen und analysiert werden können, während der Tastkopf weiterhin mit der Folgeelektronik (z. B. einer Numerischen Steuerung) verbunden sein kann und auch weiterhin betreibbar ist.

Besonders große Werkzeugmaschinen, bzw. Bearbeitungszentren weisen häufig mehrere im Bearbeitungsraum verteilte Empfängereinheiten auf. In diesem Fall ist es günstig, wenn mehreren Empfängereinheiten nur eine Analyseeinheit nachgeschaltet ist.

Die Erfindung hat demnach unter anderem den Vorteil, dass nunmehr eine einfache Fehleranalyse erreichbar ist.

Vorteilhafte Ausbildungen der Erfindung entnimmt man den abhängigen Ansprüchen.

Weitere Einzelheiten und Vorteile des erfindungsgemäßen Verfahrens ergeben sich aus der nachfolgenden Beschreibung eines Ausführungsbeispiels anhand der beiliegenden Figuren.

Es zeigen die
- Figur 1: eine schematische Darstellung des Tastsystems,
- Figur 2: einen schematischen Schaltungsplan,
- Figur 3: einen zeitlichen Pegelverlauf von verschiedenen Signalen.

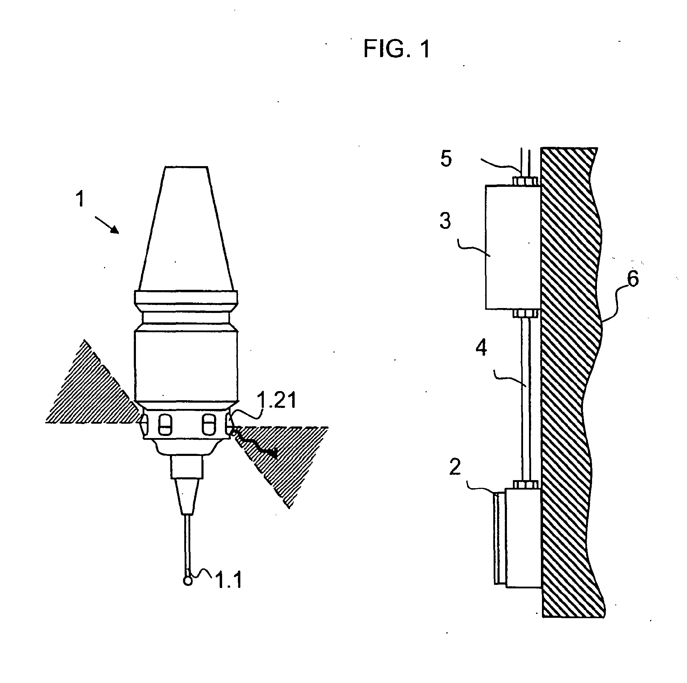

In der Figur 1 ist ein Tastkopf 1 gezeigt, der mittels eines Spannkonus in eine Werkzeugmaschine eingespannt werden kann. Für den Messzweck ist am Tastkopf 1 ein zylindrischer Taststift 1.1 vorgesehen, welcher an einem Ende eine Antastkugel aufweist.

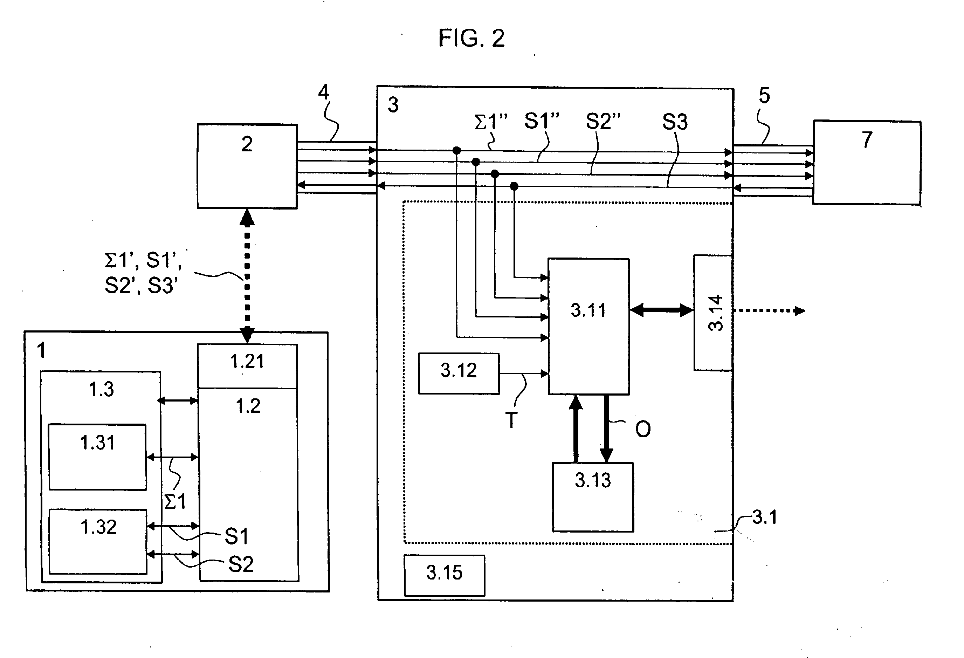

Ferner umfasst das Tastsystem eine Sender-Empfängereinheit 2, welche an einem unbeweglichen Bauteil 6 der Werkzeugmaschine fixiert ist, so dass der Tastkopf 1 gegenüber der Sender-Empfängereinheit 2 mobil, also relativ zu diesem beweglich ist. An dem unbeweglichen Bauteil 6 der Werkzeugmaschine ist ferner eine Analyseeinheit 3 angebracht. Die Sender-Empfängereinheit 2 ist über ein Kabel 4 mit der Analyseeinheit 3 verbunden, wobei die Analyseeinheit 3 mit einer Steckverbindung lösbar mit dem Kabel 4 verbunden ist. Ebenso ist ein Kabel 5 mit einer Steckverbindung mit der Analyseeinheit 3 verbunden. Das Kabel 5 dient dazu eine Verbindung zwischen Analyseeinheit 3 und einer Folgeelektronik, im vorgestellten Ausführungsbeispiel eine Numerischen Steuerung 7 herzustellen (siehe Figur 2). Derjenige Teil der Werkzeugmaschine in den der Tastkopf 1 eingespannt ist, kann im Bearbeitungsraum, entsprechend den Vorgaben der Numerischen Steuerung 7 bewegt werden.

Im gezeigten Ausführungsbeispiel sind über den Umfang des Tastkopfes 1 verteilt sechs Sende/Empfangselemente 1.21 vorgesehen, die jeweils um 60° entlang einer Umfangslinie am Tastkopf 1 versetzt befestigt sind. Mit Hilfe der Sende/Empfangselemente 1.21 können elektromagnetische Signale, hier Infrarot-Signale, ausgesendet werden, welche von der Sender-Empfängereinheit 2 empfangen werden können. Ebenso ist eine entsprechende drahtlose Kommunikation ausgehend von der Sender-Empfängereinheit 2 zu den Sende-Empfangselementen 1.21 am Tastkopf 1 möglich.

In der Figur 2 ist ein Blockschaltbild des Tastsystems in Verbindung mit der Numerischen Steuerung 7 gezeigt. Innerhalb des Tastkopfes 1 befinden sich auf einer Leiterplatte Bauteile einer Elektronik 1.3. Diese Elektronik 1.3 besteht aus einer Messelektronik 1.31 und einer Betriebselektronik 1.32. Darüber hinaus ist im Tastkopf 1 eine Wandlerelektronik 1.2 vorgesehen. Gespeist wird im Übrigen die Elektronik 1.3 von zwei in Reihe geschalteten Lithium-Batterien die in der Figur 2 nicht dargestellt sind. Die Messelektronik 1.31 und die Betriebselektronik 1.32 sind in der Lage Signale Σ1, S1, S2 zu erzeugen, also eine in einem formalen Rahmen bestimmte Folge von Pegel-Zuständen.

Die Messelektronik 1.31 erzeugt insbesondere ein Positionssignal Σ1, dessen Informationsinhalt die aktuelle Lage des Taststifts 1.1 umfasst. Insbesondere besteht der Informationsinhalt des Positionssignals Σ1 aus einer Aussage, ob der Taststift 1.1 ausgelenkt ist oder nicht. Wenn also im Bereitschaftsmodus der Taststift 1.1 ausgelenkt wird, so wird in einer Sensoreinheit diese Auslenkung detektiert und es wird sodann von der Messelektronik 1.31, welche unter anderem einen Mikroprozessor umfasst, das digitale Positionssignal Σ1 erzeugt (Änderung eines Spannungspegels von High auf Low). Dieses Positionssignal Σ1 wird darauf an die Wandlerelektronik 1.2 geleitet und dort mit Hilfe der Sende/Empfangselemente 1.21 in ein Infrarot-Positionssignal Σ1' umgewandelt.

Das Infrarot-Positionssignal Σ1' wird von der stationären Empfangseinheit 2 empfangen. Im Inneren der Sender-Empfängereinheit 2 wird das Infrarot-Positionssignal Σ1' wieder in ein elektrisches Positionssignal Σ1" umgewandelt und aufbereitet. Letztlich gelangt das aufbereitete elektrische Positionssignal Σ1" dann über das Kabel 4, die Analyseeinheit 3 und das Kabel 5 in die ortsfeste Numerischen Steuerung 7. Wenngleich auf dem Weg von der Messelektronik 1.31 zur Numerischen Steuerung 7 eine mehrfache Signalumwandlung stattfindet, bleibt der Informationsinhalt der Positionssignale Σ1, Σ1', Σ1" stets erhalten, nämlich die Information, ob der Taststift 1.1 ausgelenkt ist oder nicht.

Eine analoge Betrachtungsweise kann auch für die von der Betriebselektronik 1.32 erzeugten Betriebszustandssignale herangezogen werden. Im vorgestellten Ausführungsbeispiel werden von der Betriebselektronik 1.32 ein so genanntes Batteriewarnungssignal S1 und ein Bereitschaftssignal S2 als Betriebszustandssignale hervorgerufen.

Das Batteriewarnungssignal S1 weist im Normalzustand kontinuierlich einen "high"-Pegel auf. Erst wenn die Batteriespannung im Tastkopf 1 unter einen vorgegeben Sollwert fällt, wird von der Betriebselektronik 1.32 der Pegel des Batteriewarnungssignal S1 auf "low" geändert.

Durch das Bereitschaftssignal S2 wird von der Betriebselektronik 1.32 im Tastkopf 1 der Numerischen Steuerung 7 signalisiert, dass das Tastsystem, insbesondere der Tastkopf 1 für eine Messung bereit ist. Dem Bereitschaftssignal S2 geht ein Startsignal S3 voraus, welches von der Numerischen Steuerung 7 an den Tastkopf 1 gesendet wird.

Das Batteriewarnungssignal S1 und das Bereitschaftssignal S2 werden in der Wandlerelektronik 1.2 mit Hilfe der Sende/Empfangselemente 1.21 ebenfalls in ein Infrarot-Batteriewarnungssignal S1' und ein Infrarot-Bereitschaftssignal S2' umgewandelt. Diese werden von der stationären Empfangseinheit 2 empfangen und dort wieder in ein elektrisches Batteriewarnungssignal S1" sowie ein Bereitschaftssignal S2" umgewandelt und aufbereitet. Das aufbereitete elektrische Batteriewarnungssignal S1" und das Bereitschaftssignal S2" werden dann über das Kabel 4, die Analyseeinheit 3 und das Kabel 5 in die ortsfeste Numerischen Steuerung 7 übertragen.

Das Batteriewarnungssignal S1 wird also auch auf dem Weg von der Messelektronik 1.31 zur Numerischen Steuerung 7 mehrfach umgewandelt, wobei auch hier der Informationsinhalt der Batteriewarnungssignale S1, S1', S1" immer erhalten bleibt, nämlich die Information, ob die Batteriespannung unter den Sollwert gefallen ist oder nicht. Das gleiche gilt für die Bereitschaftssignale S2, S2', S2" deren Informationsgehalt die Gerätebereitschaft betrifft. Sowohl der Informationsgehalt des Batteriewarnungssignals S1 als auch der Informationsgehalt des Bereitschaftssignals S2 ist also unabhängig von der Lage des Taststiftes 1.1.

Der jeweilige Informationsinhalt der Positionssignale Σ1, Σ1', Σ1", der Batteriewarnungssignale S1, S1', S1" und der Bereitschaftssignale S2, S2', S2" bleibt also auf dem ganzen Übertragungsweg stets unverändert, so dass es für die Analyse der betreffenden Signale im Grundsatz gleichgültig ist an welcher Stelle oder in welcher Form die Signale vorliegen, deren Informationsinhalt der CPU 3.11 zugeführt werden. Im vorgestellten Ausführungsbeispiel werden jedenfalls die bereits zweimal umgewandelten Positionssignale Σ1", Batteriewarnungssignale S1" und Bereitschaftssignale S2" analysiert.

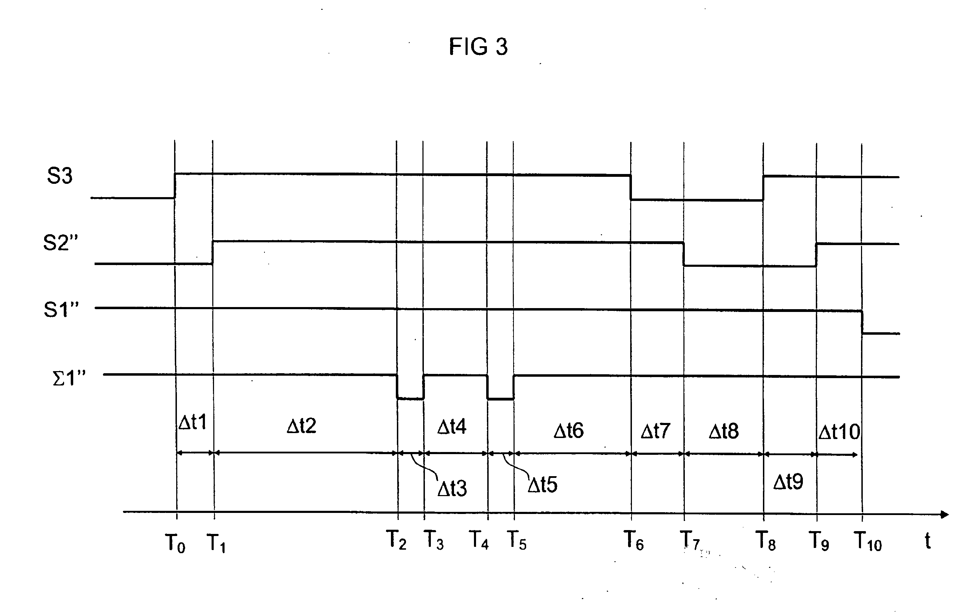

In der Figur 3 sind die Pegel des Positionssignale Σ1", des Batteriewarnungssignals S1" sowie des Bereitschaftssignals S2" und des Startsignals S3, wie sie in der Analyseeinheit 3 abgetastet werden können, in Abhängigkeit von der Zeit aufgetragen. Wenn der Tastkopf 1 aktiviert werden soll, wird von der Numerischen Steuerung 7 ein entsprechendes Startsignal S3 abgesetzt und über das Kabel 5 zur Analyseeinheit 3 übertragen. Durch das Kabel 4 wird das Startsignal S3 weiter zur Sendeinheit übertragen, die im Gehäuse der Empfangseinheit 2 untergebracht ist. In der Sendeinheit findet eine Wandlung des elektrischen Startsignals S3 in ein Infrarot-Startsignal S3' statt. Dieses wird dann von den Sende/Empfangselementen 1.21 am Tastkopf 1 empfangen und wieder umgewandelt. Bei korrekter Funktionsweise des Tastsystems wird nach Eintreffen des Startsignals S3 vom Tastkopf 1 das Bereitschaftssignal S2 gesendet.

Alternativ zur drahtlosen Signalübertragung mittels IR-Strahlen, können auch andere Formen von elektromagnetischen Strahlen zur Signalübertragung verwendet werden, beispielsweise Funksignale.

Die Analyseeinheit 3 ist im gezeigten Ausführungsbeispiel ein separates Gerät, in dessen Gehäuse sich eine Leiterplatte befindet, auf welcher eine elektronische Schaltung 3.1 untergebracht ist. Die Schaltung 3.1 umfasst eine CPU 3.11, einen Zeitgenerator in Form einer elektronischen Uhr 3.12, eine Speichereinheit 3.13, bestehend aus statischen RAMs 3.13 (Random Access Memory), sowie eine digitale Schnittstelle 3.14. Die Schnittstelle weist ein Kupplungselement in Form einer Buchse auf zur Herstellung einer Steckverbindung mit einem Schnittstellenkabel. Ferner ist die Schnittstelle 3.14 so ausgebildet, dass eine parallele Datenübertragung möglich ist. Alternativ dazu kann die Schnittstelle 3.14 natürlich auch als serielle Schnittstelle ausgebildet sein.

Ferner befindet sich in der Analyseeinheit 3 eine Batterie 3.15, welche die statischen RAMs 3.13 bei fehlender äußerer Versorgungsspannung puffert, so dass auch in diesem Zustand keine Daten verloren gehen. Alternativ können anstelle der statischen RAMs 3.13 auch Flashspeicherbausteine verwendet werden, die dann ohne eine Pufferbatterie auskommen. Jedenfalls ist die Analyseeinheit 3 so konfiguriert, dass in dieser auch ohne äußere Versorgungsspannung Daten in der Speichereinheit 3.13 erhalten bleiben.

Wenn durch die Schaltung 3.1 der Analyseeinheit 3 eine Pegeländerung des Positionssignals Σ1", des Batteriewarnungssignale S1", des Bereitschaftssignals S2" oder des Startsignals S3 festgestellt wird, so werden die Pegelzustände (entsprechend den Informationsinhalten der jeweiligen Signale) aller vier Signale und die Zeitinformation T, welche vom Zeitgenerator erzeugt wird abgefragt, und der CPU 3.11 zugeführt. Die CPU 3.11 verarbeitet diese Informationen und stellt daraus einen Datensatz her, welcher die Pegelzustände (high-low) des Positionssignals Σ1", des Batteriewarnungssignals S1", Bereitschaftssignals S2" und des Startsignals S3 mit dem Zeitpunkt der auslösenden Pegeländerung umfasst. Diese Zustandsinformationen werden also quasi mit einem Zeitstempel versehen. Der so gebildete Datensatz bzw. die von der CPU 3.11 erzeugten Output-Daten O werden der Speichereinheit 3.13 zugeführt und dort abgespeichert. In der Speichereinheit 3.13 sind demnach die Output-Daten O zeitdefiniert abgespeichert, das heißt es kann nach dem Auslesen der Speichereinheit 3.13 eine zeitliche Zuordnung der Pegelzustände erfolgen .

Erst wenn wieder eine Pegeländerung oder eine Signalflanke in einem der Signale Σ1", S1", S2" oder S3 festgestellt wird, wird diese Prozedur wiederholt und ein weiterer Datensatz abgespeichert. Entsprechend der Figur 3 werden im Speicher Daten gemäß der unten dargestellten Tabelle abgespeichert, wobei die elf Datensätze in den Tabellenspalten ersichtlich sind:

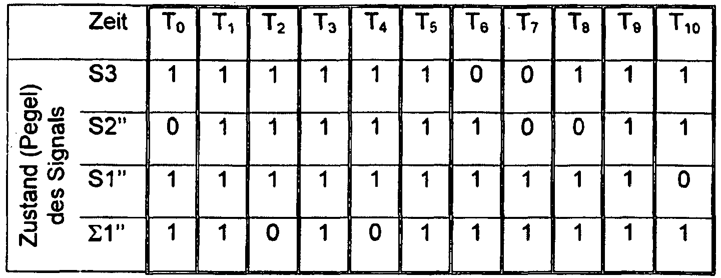

Es kann die komplette Analyseeinheit aus dem Tastsystem entnommen werden, indem die Steckverbindungen zwischen Analyseeinheit 3 und den Kabeln 4 und 5 gelöst werden. Die Verbindung zwischen der Sender-Empfängereinheit 2 und der Numerischen Steuerung 7 kann wieder verbunden werden und das Tastsystem ist im Rahmen eines ggf. eingeschränkten Funktionsumfangs betreibbar, sofern das zu untersuchende Tastsystem Funktionsstörungen aufweisen sollte.

Im vorgestellten Ausführungsbeispiel wird das Abfragen und Speichern von Daten durch eine Pegeländerung in einem der Signale erreicht. Alternativ dazu kann aber auch der Informationsinhalt der Signale Σ1, S1, S2 in vorgegebenen Zeitintervallen abgefragt, bzw. an die CPU 3.11 zugeführt werden. In diesem Fall wird dann der jeweilige Zeitpunkt für die Abfrage der Signalzustände durch die Uhr 3.12, z. B. in einer vorgegebenen Takt- oder Abfragefrequenz f, ausgelöst, wobei mit Vorteil die Uhr 3.12 so ausgestaltet ist, dass die vorgegebenen Zeitintervalle stets gleich lang sind.

Die Analyseeinheit 3 kann nunmehr zum Hersteller des Tastsystems geschickt werden, wo eine systematische Fehlersuche möglich ist. Zu diesem Zweck werden dann über die Schnittstelle 3.14 die Daten der Speichereinheit 3.13 ausgelesen. Nach dem Auslesen werden die Daten der Speichereinheit 3.13 gelöscht, so dass die Analyseeinheit 3 für den nächsten Einsatz wieder bereit ist.

Die ausgelesenen Daten können danach beispielsweise an einem Personal Computer untersucht werden. Dabei wird mit Hilfe einer geeigneten Software insbesondere die Zeitdifferenzen zwischen entsprechenden Pegeländerungen betrachtet, um Verletzungen der Timing-Vorschriften zu suchen. So darf bei einem ordnungsgemäß arbeitendem Tastsystem in der Analyseeinheit 3 der Zeitabstand Δt₁ zwischen einer Pegeländerung im Startsignal S3 und einer Pegeländerung im Bereitschaftssignal S2" nicht weniger als 200 ms und nicht mehr als 3000 ms betragen. Durch Prüfung dieser Bedingung kann beispielsweise festgestellt werden, ob das Tastsystem bereits vor dem Startbefehl S3 eingeschaltet war, oder ob das Tastsystem den Startbefehl S3, der aus der Numerischen Steuerung 7 kommt, gleichsam "übersieht".

Ebenso muss Δt₃ mindestens 20 ms lang sein. Falls kürzere Low-Pegelzustände im Positionssignal Σ1" auftreten, kann man von Störungen ausgehen. Als weitere Kriterien für die ordnungsgemäße Funktionsfähigkeit des Tastsystems wird überprüft, ob Δt₄ größer als 20 ms ist, Δt₇ und Δt₉ zwischen 200 ms und 1000 ms liegt und ob der Abstand Δt₈ größer als 0 ms ist.

Dadurch, dass die Analyseeinheit 3 zwischen der Sender-Empfängereinheit 2 und der Numerischen Steuerung 7 geschaltet ist, kann die Funktionsfähigkeit des kompletten Tastsystems untersucht werden, weil beispielsweise bei dieser Konfiguration etwaige Fehler in den Signalumwandlungsschritten erfasst werden. Wenn festgestellt wird, dass die aufgezeichneten Datensätze auf ein ordnungsgemäß arbeitendes Tastsystem schließen lassen, kann daher die Fehlersuche in der Numerischen Steuerung 7 fortgesetzt werden.

Alternativ dazu kann aber die Analyseeinheit 3 auch so ausgestaltet sein, dass diese direkt die elektromagnetischen Signale empfängt und entsprechend aufzeichnet. Des weiteren umfasst die Erfindung auch Anordnungen, bei denen die Analyseeinheit 3 direkt die abgespeicherten Datensätze an eine Serviceeinrichtung, z. B. dem Hersteller des Tastsystem überträgt. Eine derartige Übertragung kann über eine drahtlose Telefonverbindung erfolgen.

## Patentansprüche

1. Verfahren zur Überprüfung der Funktion eines Tastsystems, welches einen Tastkopf (1) mit einem Taststift (1.1) und mit einer Elektronik (1.3) umfasst, und die Elektronik (1.3)
- eine Messelektronik (1.31) umfasst, durch die ein von der Lage des Taststifts (1.1) abhängiges Positionssignal (Σ1) erzeugt wird, und
- eine Betriebselektronik (1.32) umfasst, durch die ein von der Lage des Taststiftes (1.1) unabhängiges Betriebszustandssignal (S1, S2) erzeugt wird,
mit folgenden Schritten:
• Erzeugung einer Zeitinformation (T) durch einen Zeitgenerator (3.12),
• Zuführen der Zeitinformation (T) zusammen mit den Informationsinhalten des Positionssignals (Σ1) und des Betriebszustandssignals (S1, S2) an eine CPU (3.11),
• Erzeugung von Output-Daten (○) durch eine Verarbeitung der zugeführten Informationen in der CPU (3.11), welche auch auf der Zeitinformation (T) basieren,
• Speichern der Output-Daten (○) in einer Speichereinheit (3.13), derart, dass diese zeitdefiniert sind,
• Auslesen der gespeicherten Daten über eine Schnittstelle (3.14),
• Zeitliches zuordnen der Pegelzustände der gespeicherten Daten,
• Betrachten der Zeitdifferenzen zwischen Pegeländerungen der gespeicherten Daten zum Aufsuchen von Verletzungen von Timing-Vorschriften.

2. Verfahren zur Überprüfung der Funktion eines Tastsystems, gemäß dem Anspruch 1, wobei bei jeder Änderung eines Informationsinhalts eines Signals (Σ1, S1, S2) der Informationsinhalt des Signals (Σ1, S1, S2) und die Zeitinformation (T) an die CPU (3.11) zugeführt werden.

3. Verfahren zur Überprüfung der Funktion eines Tastsystems, gemäß dem Anspruch 1 oder 2, wobei die Output-Daten (○) in Form von Datensätzen erzeugt werden, so dass jeder Datensatz die Zeitdaten und dazugehörige Signaldaten aufweist.

4. Verfahren zur Überprüfung der Funktion eines Tastsystems, gemäß einem der vorhergehenden Ansprüche, wobei das Positionssignal (Σ1) und das Betriebszustandssignal (S1, S2) jeweils in ein elektromagnetisches Signal (Σ1', S1', S2') umgewandelt wird, wobei das jeweils umgewandelte elektromagnetische Signal (Σ1', S1', S2') danach in ein elektrisches Signal (Σ1", S1", S2") umgewandelt wird und zur Ermittlung des Informationsinhalts des Positionssignals (Σ1) und des Betriebszustandssignals (S1, S2) jeweils der Pegelzustand des umgewandelten elektrischen Signals (Σ1", S1", S2") abgefragt wird und die Informationsinhalte dieser Positions- und Betriebszustandssignale (Σ1, S1, S2) der CPU (3.11) zugeführt werden, sobald sich der Pegelzustand eines der umgewandelten elektrischen Signale (Σ1", S1, S2") ändert.

5. Verfahren zur Überprüfung der Funktion eines Tastsystems, gemäß dem Anspruch 1, wobei in vorgegebenen Zeitintervallen die Informationsinhalte des Positionssignals (Σ1) und des Betriebszustandssignals (S1, S2) an die CPU (3.11) zugeführt werden.

6. Verfahren zur Überprüfung der Funktion eines Tastsystems, gemäß dem Anspruch 5, wobei die vorgegebenen Zeitintervalle stets gleich lang sind.

7. Verfahren zur Überprüfung der Funktion eines Tastsystems, gemäß einem der vorhergehenden Ansprüche, wobei das Tastsystem eine Analyseeinheit (3) umfasst, die in einem separatem Gerät in einem Gehäuse untergebracht ist und vor dem Auslesen der gespeicherten Daten aus dem Tastsystem entnommen wird, wobei auch ohne Analyseeinheit (3) der Tastkopf (1) weiterhin mit der Folgeelektronik (7) in Verbindung bringbar und betreibbar ist.

## Claims

1. Method for checking the function of a probe system which comprises a probe head (1) having a stylus (1.1) and having electronics (1.3), and the electronics (1.3)
- comprise measuring electronics (1.31) by means of which a position signal (Σ1) which is dependent on the position of the stylus (1.1) is generated, and
- comprise operating electronics (1.32) by means of which an operating-state signal (S1, S2) which is independent of the position of the stylus (1.1) is generated,
said method comprising the following steps:
• generating time information (T) by means of a time generator (3.12),
• supplying the time information (T) together with the information contents of the position signal (Σ1) and the operating-state signal (S1, S2) to a CPU (3.11),
• generating output data (○) by processing the supplied information in the CPU (3.11), which information is also based on the time information (T),
• storing the output data (O) in a storage unit (3.13) such that said output data is defined with respect to time,
• reading out the stored data via an interface (3.14),
• assigning a time to the level states of the stored data, and
• taking into account the temporal differences between level changes of the stored data in order to find infringements of timing regulations.

2. Method for checking the function of a probe system, according to Claim 1, wherein each time the information content of a signal (Σ1, S1, S2) changes, the information content of the signal (Σ1, S1, S2) and the time information (T) are supplied to the CPU (3.11).

3. Method for checking the function of a probe system, according to Claim 1 or 2, wherein the output data (○) is generated in the form of data sets, with the result that each data set comprises the time data and associated signal data.

4. Method for checking the function of a probe system, according to any of the preceding claims, wherein the position signal (Σ1) and the operating-state signal (S1, S2) are in each case converted into an electromagnetic signal (Σ1', S1', S2'), wherein the respectively converted electromagnetic signal (Σ1', S1', S2') is subsequently converted into an electrical signal (Σ1", S1", S2") and in each case the level state of the converted electrical signal (Σ1", S1", S2") is interrogated to determine the information content of the position signal (Σ1) and of the operating-state signal (S1, S2) and the information contents of said position and operating-state signals (Σ1, S1, S2) are supplied to the CPU (3.11) as soon as the level state of one of the converted electrical signals (Σ1", S1", S2") changes.

5. Method for checking the function of a probe system, according to Claim 1, wherein the information contents of the position signal (Σ1) and of the operating-state signal (S1, S2) are supplied to the CPU (3.11) during predefined time intervals.

6. Method for checking the function of a probe system, according to Claim 5, wherein the predefined time intervals are always the same length.

7. Method for checking the function of a probe system, according to any of the preceding claims, wherein the probe system comprises an analysis unit (3) which is accommodated in a separate device in a housing and is removed from the probe system before the stored data is read out, wherein, even without analysis unit (3), the probe head (1) can still be connected to and operated using the downstream electronics (7).

## Revendications

1. Procédé de vérification du fonctionnement d'un système de palpage qui comprend une tête de palpage (1) comportant une tige de palpage (1.1) et un système électronique (1.3), et le système électronique (1.3) comprend
- un système électronique de mesure (1.31) permettant de générer un signal de position (Σ1) dépendant de la position de la tige de palpage (1.1), et comprend
- un système électronique de commande (1.32) permettant de générer un signal d'état de fonctionnement (S1, S2) indépendant de la position de la position de la tige de palpage (1.1),
comportant les étapes consistant à :
• générer une information temporelle (T) au moyen d'un générateur de temps (3.12),
• délivrer l'information de temps (T) en association avec le contenu d'information du signal de position (Σ1) et du signal d'état de fonctionnement (S1, S2) à une CPU (3.11),
• générer des données de sortie (○) par traitement des informations délivrées dans la CPU (3.11), lesquelles données de sortie sont également basées sur l'information de temps (T),
• stocker les données de sortie (O) dans une unité de mémoire (3.13) de manière à ce qu'elles soient définies dans le temps,
• lire les données stockées par l'intermédiaire d'une interface (3.14),
• associer dans le temps les états de niveau des données stockées,
• observer les différences de temps entre des variations de niveau des données stockées afin de repérer des non-respects d'exigences de cadencement.

2. Procédé de vérification du fonctionnement d'un système de palpage selon la revendication 1, dans lequel, lors de chaque variation d'un contenu d'information d'un signal (Σ1, S1, S2), le contenu d'information du signal (Σ1, S1, S2) et l'information de temps (T) sont délivrés à la CPU (3.11).

3. Procédé de vérification du fonctionnement d'un système de palpage selon la revendication 1 ou 2, dans lequel, les données de sortie (○) sont générées sous la forme d'enregistrements de données de manière à ce que chaque enregistrement de données comporte les données de temps et les données de signaux qui leur correspondent.

4. Procédé de vérification du fonctionnement d'un système de palpage selon l'une quelconque des revendications précédentes, dans lequel le signal de position (Σ1) et le signal d'état de fonctionnement (S1, S2) sont respectivement convertis en un signal électromagnétique (Σ1', S1', S2'), dans lequel le signal électromagnétique respectivement converti (Σ1', S1', S2') est ensuite converti en un signal électrique (Σ1", S1", S2") et l'état de niveau du signal électrique converti (Σ1", S1", S2") est respectivement extrait pour déterminer le contenu d'information du signal de position (Σ1) et du signal d'état de fonctionnement (S1, S2) et les contenus d'information desdits signaux de position et d'état de fonctionnement (Σ1, S1, S2) sont délivrés à la CPU (3.11) dès que l'état de niveau de l'un des signaux électriques convertis (Σ1", S1", S2") varie.

5. Procédé de vérification du fonctionnement d'un système de palpage selon la revendication 1, dans lequel les contenus d'information du signal de position et (Σ1) et du signal d'état de fonctionnement (S1, S2) sont délivrés à la CPU (3.11) à des intervalles de temps prédéterminés.

6. Procédé de vérification du fonctionnement d'un système de palpage selon la revendication 5, dans lequel les intervalles de temps prédéterminés sont toujours de même longueur.

7. Procédé de vérification du fonctionnement d'un système de palpage selon l'une quelconque des revendications précédentes, dans lequel le système de palpage comprend une unité d'analyse (3) qui est logée dans un boîtier d'un appareil séparé et est retirée du système de palpage avant la lecture des données stockées, dans lequel la tête de palpage (1) peut également être connectée au système électronique séquentiel (7) et être mise en fonctionnement sans l'unité d'analyse (3).
